# EUROPEAN PATENT APPLICATION

(11) **EP 4 657 114 A1**
(43) Date of publication of application: **03.12.2025**
(21) Application number: 24305844.3
(22) Date of filing: 29.05.2024
(51) Int. Cl.: G01S 7/487, G01S 17/08

(54) **LONG TAIL REMOVAL IN DIRECT TIME OF FLIGHT RETURNED PULSE ANALYSIS**

(71) Applicant: STMicroelectronics International N.V., 1228 Plan-les-Ouates, Geneva (CH)
(72) Inventor: MACELA, Victor, 75006 Paris (FR); LEBIHEN, Thierry, 92340 BOURG-LA-REINE (FR)
(74) Representative: Casalonga

(57) **Abstract**

Method for detecting a presence of at least one object (OBJ) within a field of view of a time-of-flight sensor (SENS), comprising:
- obtaining (410) a current histogram (HST) generated by the time-of-flight sensor, the histogram comprising a distribution of bins associating a number of detected photons to a given acquisition time,
- providing (420) a precomputed nominal global pulse shape of the distribution, including a reference part (421) and a correction part (422);
- performing (430) a fitting of the position of at least the reference part (421) to the current histogram (HST);
- determining (440) the position (FT_423) of a long tail part (LT) of the current histogram using the position (423) of the correction part (422) relatively to the reference part (421) inside the precomputed nominal global pulse shape;
- calculating an estimate of a long tail distribution in the current histogram from the correction part (422) and the determined position (FT_423); and
- performing a correction, (600) in the current histogram, of the calculated estimate of the long tail distribution.

## Description

Some embodiments of the disclosure relate to "Time of Flight" (ToF) devices (either dToF: direct Time of Flight or iToF: indirect Time of Flight devices).

Devices for determining the distance (or range) to objects or targets are known. One currently used method is called "Time of Flight" (ToF). This method comprises sending a light signal towards the object and measuring the time taken by the signal to travel to the object and to travel back to the device.

dToF (direct Time of Flight) devices measure directly the time taken by the signal to travel to the object and to travel back to the device.

iToF (indirect Time of Flight) devices calculate the time taken by the signal for this travel by measuring the phase shift between the signal coming out of the light source and the signal reflected from the object and detected by a light sensor. Knowing this phase shift and the speed of light enables the determination of the distance to the object.

Single photon avalanche diodes (SPAD) may be used as a detector of the reflected light pulse. A photon may generate a carrier in the SPAD through the photoelectric effect. The photo generated carrier may trigger an avalanche current in one or more of the SPADs in a SPAD pixel array. The avalanche current may signal an event, namely that a photon of light has been detected.

In order to produce accurate timing information on the arrival of each individual photon originating from the optical light radiation, single-photon sensitive detectors may be adapted to generate time-series histograms of the number of photons detected during successive emission periods.

Thus, such time-series histograms are constituted by several bins, each associating a number of detected photons to a given acquisition time during the emission periods.

Some bins of such histograms may be representative of photons originating from the radiation reflected by an object. Hence, these bins are representative of the presence of an object within the field of view of the time-of-flight sensor. In general, these bins have a number of photons greater than a given threshold below which the number of detected photons is the one of an ambient noise.

Algorithms are then implemented to identify the bins of the histograms that are representative of photons originating from the radiation reflected by one or several object(s).

In particular, it is possible to identify the bins that are representative of the presence of an object by comparing the bins with a fixed threshold greater than or equal to the given threshold delimiting the ambient noise. The ambient noise typically designates the background noise originating from the lightening conditions of use of the sensor (in typical ToF application, the infrared "ambient" light which is not emitted by the emitter).

Nevertheless, the classical identification algorithms may turn out to be insufficient to correctly identify the bins representative of the presence of an object and those which are not, with respect to the reality of the scene, called "ground truth".

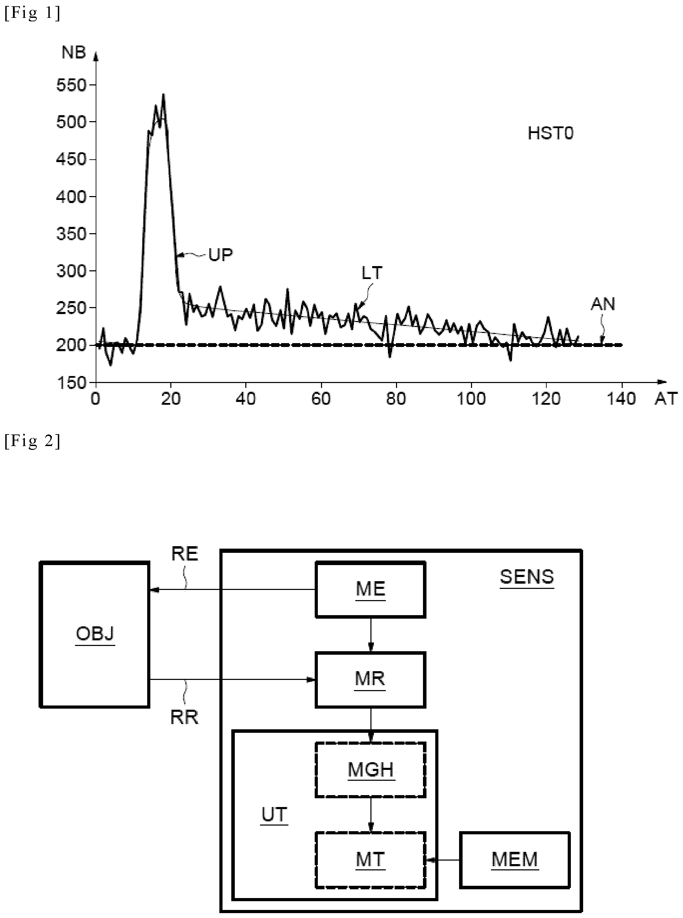

Figure 1 illustrates a histogram HSTO that may be generated by a classical ToF sensor. The histogram HSTO depicts bins in ordinates as the number of detected photons NB per acquisition time, the acquisition times AT being represented in the form of bin numbers in abscissas.

From the signal returned by the object of the ground truth, the Time of Flight device generates a global distribution of bins (i.e., a histogram), defined as the "global pulse", whose first part is the "useful pulse" (the pulse UP). The useful pulse UP is typically followed by an undesirable distribution of bins LT, called "long tail", shaped with a progressive decrease of the number of detected photons. Bins of the long tail distribution LT are not representative of photons originating from a radiation reflected by an object and may nevertheless be higher than the threshold of ambient noise AN.

In addition, the long tail LT can vary in intensity and shape according to the amplitude of the useful pulse UP, and also in function of some other parameters such as the temperature.

The long tail LT can be the result of various phenomena, originating in the emitter (e.g., at the Vertical-Cavity Surface-Emitting Laser "VCSEL" driver) or in the receiver (e.g., the afterpulsing effect).

On the one hand, ignoring the bins of the long tail distribution LT may occult a secondary pulse located in this tail (i.e., part of the same ranging measurement). The secondary pulse may be representative of the presence of another object, which would not thus be detected.

On the other hand, considering the bins of the long tail distribution LT as a useful signal may lead to false positive detections. Too many false positives to process can lead to a drop in the frame rate at close distance and to non-uniform frame rate from close to far distances.

Conventional Expectation-Maximisation algorithms could be used, for whatever parametrizable pulses in a histogram, for recognizing and correcting the undesired long tail distribution LT. However, the use of Expectation-Maximisation algorithms would be unrealistic because it is far too complex in terms of computation for real-time embedded sensors, and that also supposes that the long tail distribution LT is easily parametrizable with a reasonable number of parameters (which is not straightforward to assume).

Hence, there should be provided an effective method for detecting the presence of an object in a reliable way.

According to embodiments a solution is proposed to dispense with these undesirable long tail distributions or to compensate for them; the solution having the following advantages:
It allows to rapidly remove or compensate for a long tail in the return histogram,
It allows to simplify the pulse detection algorithm,
By restricting the processing to the real pulses, it allows to maintain a high enough frame rate at low distances and a regular frame rate over the range of distances.

According to a particular embodiment it is proposed to
- precompute a global pulse shape (i.e., the shape of a histogram generated from a unique object in the field of view of the sensor) and separate it into a precomputed reference part and a precomputed correction part ;
- fit the precomputed reference part (or possibly the precomputed global pulse shape) to the current histogram in order to determine the position of the long tail part of the current histogram, this determination using the known position of the correction part relatively to the reference part inside the precomputed global pulse shape;
- providing a final estimate of the long-tail-only distribution (i.e., without any secondary pulses representative of the presence of another objects) inside the long tail part of the current histogram, this final estimate being calculated from the precomputed correction part, the calculation possibly including to adjust the precomputed correction part to the long tail part of the current histogram by a second fitting (using the determined position of the long tail part);
- subtract from the long tail part of the current histogram the final estimate of the undesired long-tail-only distribution (or compensate for this distribution by using the final estimate in the used pulse detection algorithm).

According to an aspect, a method is proposed for detecting a presence of at least one object within a field of view of a time-of-flight sensor, comprising:
- obtaining a current histogram generated by the time-of-flight sensor, the histogram comprising a distribution of bins associating a number of detected photons to a given acquisition time,
- providing a precomputed nominal global pulse shape of the distribution, including a reference part and a correction part;
- performing a fitting of the position (e.g. a fitting in time) of at least the reference part to the current histogram;
- determining the position of a long tail part of the current histogram using the position of the correction part relatively to the reference part inside the precomputed nominal global pulse shape;
- calculating an estimate of a long tail distribution in the current histogram from the precomputed correction part and the determined position; and
- performing a correction, in the current histogram, of the calculated estimate of the long tail distribution.

In other words, it is proposed to fit the position of a precomputed global pulse shape, either fitted entirely or fitted only on its reference part, to provide an estimate of the long-tail distribution (i.e. the "long-tail-only" distribution without any secondary pulses representative of the presence of another objects) of the currently returned histogram, from the correction part of the precomputed shape of the long tail, and to correct the distribution by using this estimate.

Consequently, the correction of the undesirable long tail distribution, is performed very effectively in terms of high accuracy and low computational consumption.

According to an embodiment, the step performing a fitting of the position includes an alignment in time of the entire nominal global pulse shape with the current histogram.

According to an alternative embodiment, the step performing a fitting of the position includes an identification in the current histogram of a useful pulse representative of the presence of an object, for example the part of the current histogram with the highest amplitude, and an alignment of the position (e.g. an alignment in time) of the reference part with the useful pulse of the current histogram.

According to an embodiment, the method additionally comprises:
- performing a fitting in amplitude of the correction part to the long tail part of the current histogram.

According to an embodiment, the reference part of the precomputed nominal global pulse shape includes a shape of a nominal useful pulse.

According to an embodiment, the correction part of the precomputed nominal global pulse shape includes a shape of a nominal long tail including a progressive decreasing series of bins.

According to an embodiment, the method additionally comprises:
- emitting an optical radiation,
- counting photons detected from an optical radiation,
- generating the current histogram according to the count of detected photons over respective acquisition times, the acquisition times succeeding each other during an acquisition period starting with the emission of the optical radiation.

According to another aspect, a system is proposed, including a time-of-flight sensor adapted for detecting the presence of at least one object within a field of view, the system comprising a processing unit configured:
- to generate a current histogram comprising a distribution of bins associating a number of detected photons to a given acquisition time,
- to provide a precomputed nominal global pulse shape of the distribution, including a reference part and a correction part;
- to perform a fitting of the position of at least the reference part to the current histogram;
- to determine the position of a long tail part of the current histogram using the position of the correction part relatively to the reference part inside the precomputed nominal global pulse shape;
- to calculate an estimate of a long tail distribution in the current histogram from the precomputed correction part and the determined position; and
- to perform a correction, in the current histogram, of the calculated estimate of the long tail distribution.

According to an embodiment, the processing unit is configured to perform the fitting of the position including an alignment in time of the entire nominal global pulse shape with the current histogram.

According to an alternative embodiment, the processing unit is configured to perform the fitting of the position including an identification in the current histogram of a useful pulse representative of the presence of an object, and an alignment of the position of the reference part with the useful pulse of the current histogram.

According to an embodiment, the processing unit is additionally configured:
- to perform a fitting in amplitude of the correction part to the long tail part of the current histogram.

According to an embodiment, the reference part of the precomputed nominal global pulse shape includes a shape of a nominal useful pulse UP.

According to an embodiment, the correction part of the precomputed nominal global pulse shape includes a shape of a nominal long tail including a progressive decreasing series of bins.

According to an embodiment, the system additionally comprises:
- emitting means configured to emit an optical radiation,
- receiving means configured to count photons detected from an optical radiation,
and wherein the processing unit includes:
- histogram generation means configured to generate the current histogram according to the count of detected photons over respective acquisition times, the acquisition times succeeding each other during an acquisition period starting with the emission of the optical radiation.

Other advantages and features of the invention will appear upon examining the detailed description of non-limiting implementation and embodiments, and from the appended drawings wherein:
[Fig.1] previously described, illustrates a histogram HSTO that may be generated by a time-of-flight sensor;
[Fig.2];
[Fig.3];
[Fig.4];
[Fig.5];

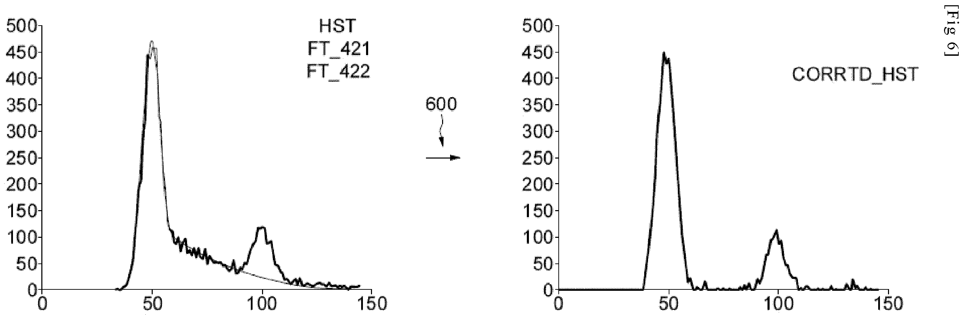

[Fig.6] schematically illustrate embodiments and implementation of the invention.

Figure 2 illustrates a time-of-flight sensor SENS according to an embodiment of the invention.

The time-of-flight sensor SENS comprises emitting means ME configured to emit optical radiations RE on a periodic basis.

The emitting means ME may consist of a Vertical-Cavity Surface-Emitting Laser, commonly known to persons skilled in the art under the acronym "VCSEL".

If one or several object(s) OBJ are present within the field of the optical radiation, the time-of-flight sensor SENS could receive a reflected optical radiation RR resulting from a reflection of the optical radiation on the object(s) OBJ.

Thus, the time-of-flight sensor SENS comprises receiving means MR configured to receive optical radiations RR reflected by the objects OBJ within the field of view of the time-of-flight sensor.

The receiving means MR comprise photons detector(s), such as single photon avalanche diodes, classically known as "SPAD" by the person skilled in the art, that may be used as a detector of the reflected light pulses.

The time-of-flight sensor SENS comprises histogram generation means MGH configured to generate a histogram from the signals output by the array of single photon detectors. In particular, the histogram generation means MGH are configured to count the number of photons detected by the receiving means at several successive acquisition times.

Thus, the histogram generation means MGH are configured to generate a histogram comprising different bins. Each bin associates a number of detected photons to a given acquisition time.

The generated histograms are not plotted in a graph, as the term "plot" may be generally used for, while the terms "to generate a histogram" are to be understood as storing an organization of data (possibly corresponding to a histogram organization) in a memory.

More particularly, a histogram is acquired over a given period. The bins of a histogram are associated to different acquisition times of the acquisition period of the histogram. The acquisition period of one histogram starts as of the time of emission of an optical radiation by the emitting means, and lasts until a predefined number of bins is acquired.

By "time", it should be understood a very short duration in comparison with the acquisition period of a histogram. For example, an acquisition time may last 250 picoseconds and an acquisition period of a histogram may last 36 nanoseconds in order to acquire 144 bins.

Furthermore, it is also possible to acquire and sum up several histograms one after another. The overall period of acquisition of these histograms may be in the range of 15 milliseconds.

Preferably, the histogram generation means MGH is implemented by software means executed by a processing unit UT of the time-of-flight sensor. For example, the processing unit UT may be integrated in a microprocessor device.

The time-of-flight sensor SENS also comprises processing means MT configured to perform postprocessing on the generated histograms. The postprocessing allows determining the bins representative of the presence of an object within the field of view of the sensor. A bin distribution representative of the presence of an object allows determining the distance between the object and the sensor by taking into account the acquisition time associated with the bins of this distribution.

Typically, the bin distribution representative of the presence of an object within the field of view of the sensor corresponds to a Gaussian pulse distribution (that is to say a distribution having a shape that may be approximated by a Gaussian shape) and is called useful pulse UP.

Preferably, the processing means MT is implemented by software means executed by the processing unit UT.

The time-of-flight sensor SENS typically comprises an internal memory MEM, adapted to be accessed by the processing unit UT, and namely, the processing means MT.

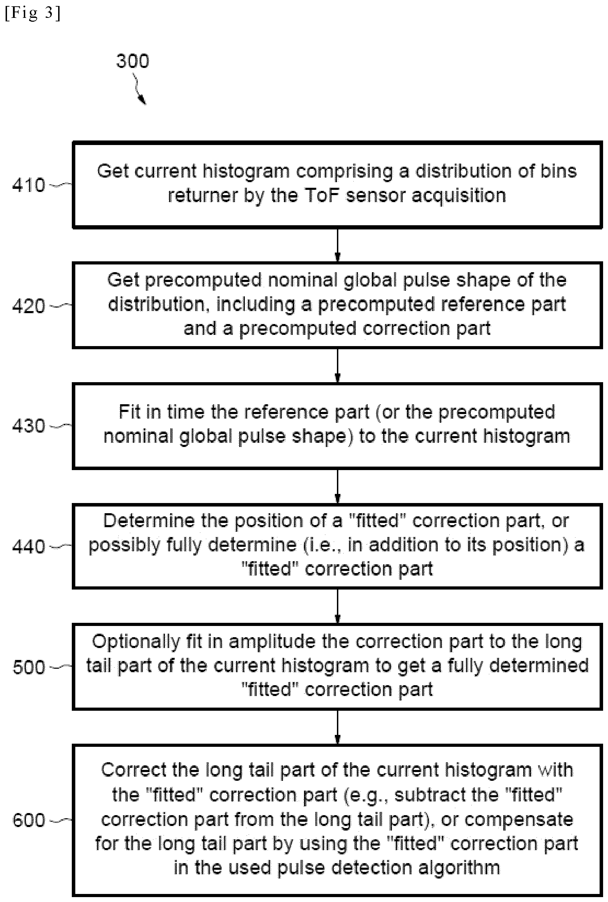

In particular, the processing means MT are configured to receive the histogram generated by the histogram generation means MGH, and to carry out the method 300 for detecting the presence of at least one object described hereinafter in relation with figure 3.

The method 300 includes in particular steps that are designed so as to be able to correct (e.g. to suppress or compensate for) the undesirable long tail distribution LT (as described in relation with figure 1).

The detecting and correcting (e.g. suppressing or compensating) method 300 may be performed in the pipeline processing of the ToF sensor SENS, as a signal processing between the "raw" frame acquisition by the pixel array and the output of a distance map.

In this regard, we now turn to figure 3.

Figure 3 illustrates an advantageous method 300 for detecting the presence of at least one object.

Implementation of the method 300 starts by obtaining, at a step 410, a current histogram HST generated by the time-of-flight sensor SENS as described above in relation with figure 1. The histogram HST accordingly comprises a distribution of bins associating a number of detected photons NB to a given acquisition time AT.

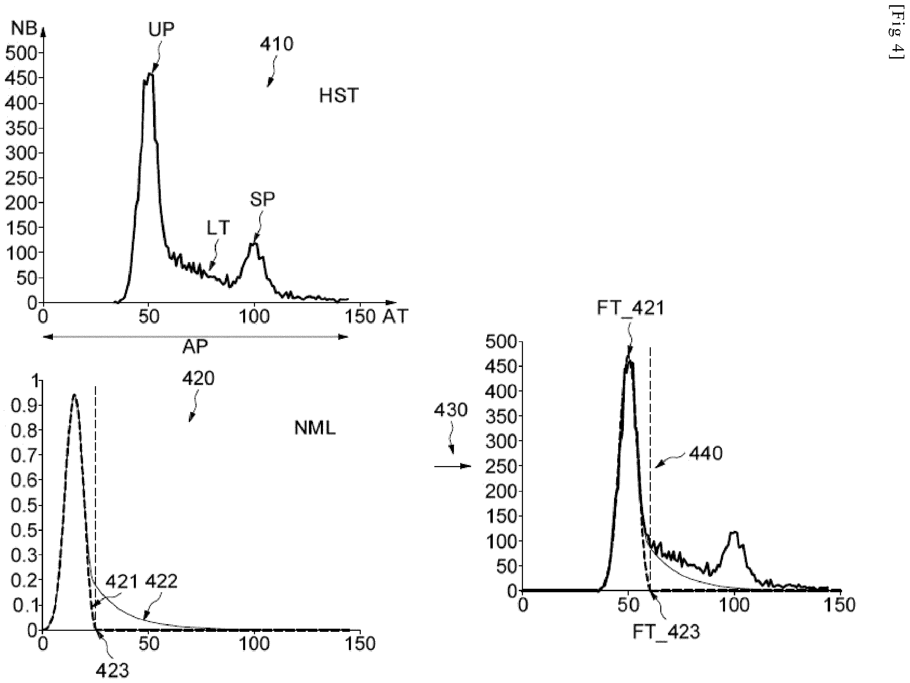

The method includes, at a step 420, providing a precomputed nominal global pulse shape of the distribution, including a reference part 421 (figure 4) and a correction part 422 (figure 4).

The method includes, at a step 430, performing a fitting in time (that is to say the position along the abscissa axis of acquisition time AT) of the precomputed reference part (or possibly of the precomputed nominal global pulse shape) to the current histogram HST.

At a step 440, the method includes determining the position of the long tail part LT of the current histogram HST, this determination using the known position 423 of the correction part 422 relatively to the reference part 421 inside the precomputed nominal global pulse shape.

In this regard, we now turn to figure 4.

Figure 4 depicts example of implementation for the aforementioned steps 410, 420, 430 and 440 of the method 300.

Hence, the current histogram HST returned by the ToF sensor acquisition at step 410, may result from emitting an optical radiation RE (figure 2), counting photons detected from an optical radiation RR (figure 2), and generating the current histogram HST according to the count of detected photons NB over respective acquisition times AT, the acquisition times succeeding each other during an acquisition period AP starting with the emission of the optical radiation (at "0").

In this example of returned histogram HST, the count NB ordinate axis has been shifted so as to position the ambient noise level at zero.

In this example the current histogram HST includes a useful pulse distribution UP; a long tail distribution LT; a secondary pulse distribution SP.

The useful pulse distribution UP is typical and representative of the presence of the object OBJ (figure 2) in the field of view of the sensor. The useful pulse distribution UP may correspond to, e.g. look like, a Gaussian distribution, centred on bin "50" corresponding to a first object distance, having a maximum magnitude of about "450" counts, and a width at half maximum of about 10 bins (ten unities of acquisition times AT).

The long tail distribution LT is not representative of the presence of an object within the field of view of the sensor but is an undesired effect of various phenomena originating in the emitter or in the receiver. The typical long tail distribution LT has a shape of a progressive decreasing series of bins, starting on the right side of the useful pulse UP, in this example at a magnitude of about "100" counts at bin "60", or one fifth (1/5) of the maximum magnitude of the useful pulse. The long tail decreases to magnitude zero at the last bin "144". The decrease shape may be expressed in a variety of decrease shapes, like an exponential decrease, a hyperbolic decrease or a linear decrease.

The secondary pulse distribution SP is also representative of the presence of another object in the field of view of the sensor. The secondary pulse distribution SP may correspond to, e.g. look like, a Gaussian distribution, in this example centred on bin "100" corresponding to a second object distance, having a maximum magnitude of about "100" counts, and a width at half maximum of about 10 bins. The secondary pulse distribution SP is superimposed on the long tail distribution LT. Consequently, cases with lower max amplitude of such secondary pulses SP may be occulted by the long tail distribution LT.

At the step 420, the precomputed nominal global pulse shape NML of the global distribution is provided. For example, the precomputed nominal global pulse shape NML is provided from the memory MEM, possibly amongst a set of precomputed nominal global pulse shapes NML that are designed to match with various ranging conditions like various device temperatures.

From a general point of view, the precomputed nominal global pulse shape NML includes a reference part 421 adapted to match with a "normal" or "useful" contribution in the histogram of a given detection case with same proportions as typical useful pulse distribution UP described above. The precomputed nominal global pulse shape NML also includes a correction part 422 designed to match with an undesired side effect, to be corrected, and involved by (or relating to) the said given detection case, such as a long tail shape 422 with same properties as described above in reference to the typical long tail distribution LT.

For that purpose, in the present example, the precomputed nominal global pulse shape NML includes a useful pulse shape 421 with same properties as the typical useful pulse distribution UP described above, and a long tail shape 422 with same properties as the typical long tail distribution LT described above.

The useful pulse shape 421 and the long tail shape 422 in the precomputed nominal global pulse shape NML are conceived as two distinct but linked together parts. The useful pulse shape 421 is called reference part 421, because it will be used as a reference to fit to the current case, and the long tail shape 422 is called correction part 422, because it will be used as a corrective / compensating element of distribution.

At the step 430, we fit in time the reference part 421 (or possibly the nominal global pulse shape NML) to the current histogram HST, the part of the current histogram HST with the highest amplitude being the useful pulse distribution UP of the current histogram HST.

For that purpose, the fitting step 430 may firstly include an identification in the current histogram HST of the useful pulse UP representative of the presence of an object OBJ, to be the part of the current histogram with the highest amplitude.

For instance, this identification may include a simple identification of the bin having the largest magnitude in the histogram.

The purpose of the fitting step 430 is to align in time the reference part 421 or the nominal global pulse shape NML with the useful pulse distribution UP of the current histogram HST.

In other words, in a first act, at step 430, the reference part 421 or the nominal global pulse shape NML is positioned in order to fit in time to the useful pulse UP, that is to say to design a "fitted" reference part FT_421 which aligns as much as possible in time with the shape of the useful pulse distribution UP in the current histogram HST.

Several techniques can be used for fitting in time 430 the reference part 421 or the nominal global pulse shape NML to each current case UP, such as for instance:
- a correlation technique using a precomputed super-resolution shape;
- a shifting technique to match the maximum of the current histogram HST.

The correlation technique may use a precomputed super-resolution nominal global pulse shape NML of the global pulse, or a precomputed super-resolution nominal shape of the useful pulse. A super-resolution shape being a shape with a finer resolution compared to the resolution of the acquisition times AT of the histograms generated by the histogram generation means MGH. Such super-resolution shape can be obtained from ranging measurements with an appropriately configured time-of-flight device. The super-resolution shape is characterized by its up-sampling factor with respect to the histograms generated by the histogram generation means MGH. The higher this up-sampling factor (meaning the finer the resolution of the super-resolution shape), the more precise will be the alignment in time with the useful pulse distribution UP of the current histogram HST.

The result of this correlation technique is the "fitted" reference part FT_421, obtained in a position aligned with the current histogram.

Optionally, still at step 430, the alignment obtained for the "fitted" reference part FT_421 can be applied to the nominal global pulse shape NML and the resulting aligned nominal global pulse shape can be further scaled to match in amplitude the useful pulse UP.

The shifting technique may include a shift of the reference part 421 or the nominal global pulse shape NML to match the maximum of the current histogram HST. The shifting technique includes determining the bin having the largest magnitude in the current histogram HST and shifting to this bin the center of the reference part 421.

The result of this shift is the "fitted" reference part FT_421, obtained in a position aligned with the current histogram.

Optionally, still at step 430, the shift calculated for the "fitted" reference part FT_421 can be applied to the nominal global pulse shape NML and the resulting shifted nominal global pulse shape can be further scaled to match in amplitude the useful pulse UP.

In the example depicted in figure 4, the center of the reference part 421is shifted to bin "50", resulting in the "fitted" reference part FT_421. The same shift is then applied to the nominal global pulse shape NML which is finally scaled by a factor adapted to reach about "450" counts at the maximum.

Also, the fitting step 430 can be done based on a nominal filtered global pulse shape on an equally filtered histogram (for example to use a less noisy histogram in the fitting step 430), using a post fitting adjustment coefficient to rescale the filtered shape to its unfiltered amplitude in case the shifted nominal filtered global pulse shape is further scaled to match in amplitude the useful pulse UP.

At step 440, the position FT_423 of a "fitted" correction part FT_422 is determined, this position being defined as the position of the long tail part LT of the current histogram HST. The position of the long tail part LT of the current histogram HST is determined using the position, resulting from step 430, of the "fitted" reference part FT_421 inside the current histogram HST and from the knowledge of the position 423 of the correction part 422 relatively to the reference part 421 inside the precomputed nominal global pulse shape NML.

In other words, in a second act, at step 440, we obtain the position FT_423 of a "fitted" correction part FT_422 according to a fitting in time of the reference part 421 (or possibly the nominal global pulse shape NML) to the useful pulse UP.

This advantageously offers the position FT_423 of a "fitted" correction part FT_422, according to a fitting in time performed on the useful pulse distributions UP whose shape is fixed and known, rather than on the global distributions of bins (i.e., the histograms) which may contain secondary pulses SP in their long tail distribution, which can make the fitting less precise.

For example, determining 440 the position FT_423 of the "fitted" correction part FT_422 may include determining this position as the starting position of the long tail distribution LT, that is to say the position (at the bin or sub-bin resolution) where the long tail distribution starts inside the current histogram HST. This starting position may be determined using the position of the "fitted" reference part FT_421 inside the current histogram HST and the knowledge of the position 423 of the correction part 422 relatively to the reference part 421 inside the precomputed nominal global pulse shape NML.

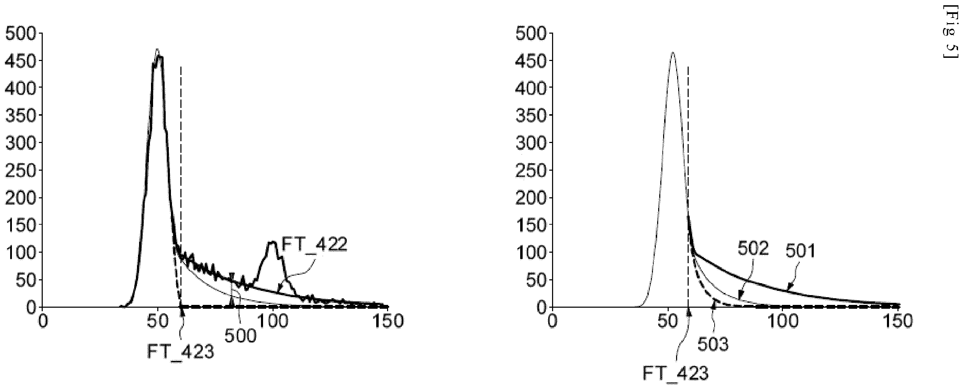

At step 440, the "fitted" correction part FT_422 can be fully determined (i.e., in addition to its position FT_423) if, at step 430, the nominal global pulse shape NML has been aligned (or shifted) and scaled to match in amplitude the useful pulse UP. The "fitted" correction part FT_422 is then simply, inside the aligned (or shifted) and scaled nominal global pulse shape, the correction part 422 equally aligned (or shifted) and scaled (as depicted by figure 5).

If, at step 430, the nominal global pulse shape NML has not been aligned (or shifted) and scaled to match in amplitude the useful pulse UP, then only the position Ft_423 of the "fitted" correction part FT_422 can be determined at step 440 and another step is required to fully determined the "fitted" correction part FT_422.

We now refer back to figure 3.

After the mechanisms of steps 410, 420, 430 described in relation with figure 4, the method 300 may include a step 500 including a second fitting operation to fully determine the "fitted" correction part FT_422. This step 500 is optional in case the "fitted" correction part FT_422 has been fully determined at step 440.

In this regard, we now turn to figure 5.

Figure 5 depicts the second fitting operation 500 of the correction part 422 to a long-tail part of the current histogram. The second fitting operation 500 includes first setting the correction part 422 at the position FT_423 determined at step 440 for the "fitted" correction part FT_422, and then matching in amplitude the correction part 422 with the long tail distribution LT.

The result of the fitting operation 500 is the "fitted" correction part FT_422 (i.e., the fully determined "fitted" correction part FT_422).

Several techniques can be used for the second fitting operation 500 such as for instance:
- A regression technique such as a root mean square (RMS) error regression, after having filtered out the points that are likely to belong to a secondary pulse SP. Filtering out these points may be performed for instance with respect to the derivatives in the long tail region LT, detecting portions to eliminate, for instance rising and falling portions where the slopes are significantly different from the average slope in the long tail region LT.
- A scaling technique, including scaling the correction part 422 with the scale factor that permits the "fitted" reference part FT_421 to match in amplitude the useful pulse UP.

For the second fitting operation 500, different precomputed known functions (501, 502, 503, ...) depending on the device temperature could also be used as the correction part (422).

We refer back to figure 3.

The method 300 finally includes a step 600 correcting the long tail part LT of the current histogram HST either by removing (or subtracting) the "fitted" correction part FT_422 from the current histogram, or compensating for the long tail part LT by using the "fitted" correction part FT_422 in the pulse detection algorithm (such as for instance by making a detection threshold varying according to the "fitted" correction part FT_422 variations).

In this regard, we now turn to figure 6.

Figure 6 depicts the subtracting option for the correcting operation 600.

The left side of figure 6 depicts a superimposition of three graphs: the graph drawing the returned histogram HST, the graph drawing the "fitted" reference part FT_421 derived from the precomputed reference part 421, and the graph drawing the "fitted" correction part FT_422 derived from the precomputed correction part 422.

The right side of figure 6 depicts a graph drawing the corrected current histogram CORRTD_HST, which is the current histogram HST from which the "fitted" correction part FT_422 have been removed (subtracted) from its long tail part LT.

As a result, the undesirable long tail distribution LT may be precisely corrected in the current histogram HST, as the corrected current histogram CORRTD_HST shows clear and distinct the useful pulse UP and the secondary pulse SP.

In consequence, further (post-)processing, for example performed by the processing means MT, may be highly improved by being performed on such corrected current histograms CORRTD_HST, such as for example the detection of the presence of object(s) in the field of view, possibly of a plurality of objects at different distances from the sensor.

In resume, it has been described embodiments that are configured so as to be able to:
- separate the global pulse shape into a precomputed reference part and a precomputed correction part and use the "fitted" reference part to get the position of the "fitted" correction part;
- possibly adjust the precomputed correction part to the long tail part of the current histogram by a second fitting in amplitude;
- subtract from the long tail part of the current histogram an estimate of the undesired long tail distribution (or compensate for this distribution by using its estimate in the used pulse detection algorithm), this estimate being the "fitted" correction part.

In other words, a very effective correction or compensation of undesired distribution elements in the histograms (long tail distributions) is carried out by using a precomputed global pulse or a precomputed shape of the useful pulse UP, called the reference part, to remove from the long tail part of the currently returned histogram an estimate of the long tail distribution, this estimate being calculated from the precomputed shape of the long tail, called the correction part, or to compensate for this distribution by using its estimate in the used pulse detection algorithm, by performing at least one fitting (in time) with the precomputed global pulse shape or the reference part of it and possibly a separate second fitting (in amplitude) with the correction part of it.

## Claims

1. Method for detecting a presence of at least one object (OBJ) within a field of view of a time-of-flight sensor (SENS), comprising:
- obtaining (410) a current histogram (HST) generated by the time-of-flight sensor, the histogram comprising a distribution of bins associating a number of detected photons to a given acquisition time,
- providing (420) a precomputed nominal global pulse shape (NML) of the distribution, including a reference part (421) and a correction part (422);
- performing (430) a fitting of the position of at least the reference part (421) to the current histogram (HST);
- determining (440) the position (FT_423) of a long tail part (LT) of the current histogram using the position (423) of the correction part (422) relatively to the reference part (421) inside the precomputed nominal global pulse shape;
- calculating an estimate of a long tail distribution in the current histogram from the precomputed correction part (422) and the determined position (FT_423); and
- performing a correction, (600) in the current histogram, of the calculated estimate of the long tail distribution.

2. Method according to claim 1, wherein the step performing (430) a fitting of the position includes an alignment in time of the entire nominal global pulse shape (FT_421, FT_423) with the current histogram.

3. Method according to claim 1, wherein the step performing (430) a fitting of the position includes an identification in the current histogram (HST) of a useful pulse (UP) representative of the presence of an object (OBJ), and an alignment of the position of the reference part (421) with the useful pulse (UP) of the current histogram (HST).

4. Method according to any of claims 1 to 3, wherein the method additionally comprises:
- performing a fitting in amplitude (500) of the correction part (422) to the long tail part (LT) of the current histogram.

5. Method according to any of claims 1 to 4, wherein the reference part (421) of the precomputed nominal global pulse shape includes a shape of a nominal useful pulse (UP).

6. Method according to any of claims 1 to 5, wherein the correction part (422) of the precomputed nominal global pulse shape includes a shape of a nominal long tail (LT) including a progressive decreasing series of bins.

7. Method according to any of claims 1 to 6, additionally including:
- emitting an optical radiation (RE),
- counting photons detected from an optical radiation (RR),
- generating (MGH) the current histogram according to the count of detected photons over respective acquisition times, the acquisition times succeeding each other during an acquisition period starting with the emission of the optical radiation (RE).

8. System including a time-of-flight sensor (SENS) adapted for detecting a presence of at least one object (OBJ) within a field of view, comprising a processing unit (UT) configured:
- to generate a current histogram (HST) comprising a distribution of bins associating a number of detected photons to a given acquisition time,
- to provide (420) a precomputed nominal global pulse shape (NML) of the distribution, including a reference part (421) and a correction part (422);
- to perform (430) a fitting of the position of at least the reference part (421) to the current histogram (HIST);
- to determine (440) the position (FT_423) of a long tail part (LT) of the current histogram using the position (423) of the correction part (422) relatively to the reference part (421) inside the precomputed nominal global pulse shape;
- to calculate an estimate of a long tail distribution in the current histogram from the precomputed correction part (422) and the determined position (FT_423); and
- to perform a correction, (600) in the current histogram, of the calculated estimate of the long tail distribution.

9. System according to claim 8, wherein the processing unit (UT) is configured to perform (430) the fitting of the position including an alignment in time of the entire nominal global pulse shape (FT_421, FT_423) with the current histogram.

10. System according to claim 8, wherein the processing unit (UT) is configured to perform (430) the fitting of the position including an identification in the current histogram (HST) of a useful pulse (UP) representative of the presence of an object (OBJ), and an alignment of the position of the reference part (421) with the useful pulse (UP) of the current histogram (HST).

11. System according to any of claims 8 to 10, wherein the processing unit (UT) is additionally configured:
- to perform a fitting in amplitude (500) of the correction part (422) to the long tail part (LT) of the current histogram.

12. System according to any of claims 8 to 11, wherein the reference part (421) of the precomputed nominal global pulse shape includes a shape of a nominal useful pulse (UP).

13. System according to any of claims 8 to 12, wherein the correction part (422) of the precomputed nominal global pulse shape includes a shape of a nominal long tail (LT) including a progressive decreasing series of bins.

14. System according to any of claims 8 to 13, additionally comprising:
- emitting means (ME) configured to emit an optical radiation,
- receiving means (MR) configured to count photons detected from an optical radiation,
and wherein the processing unit (UT) includes:
- histogram generation means (MGH) configured to generate the current histogram (HST) according to the count of detected photons over respective acquisition times, the acquisition times succeeding each other during an acquisition period starting with the emission of the optical radiation (RE).
